# EUROPEAN PATENT APPLICATION

(11) **EP 4 072 083 A1**
(43) Date of publication of application: **12.10.2022**
(21) Application number: 20910438.9
(22) Date of filing: 21.09.2020
(51) Int. Cl.: H04L 12/803

(54) **LOAD BALANCING METHOD AND DEVICE**

(30) Priority: 31.12.2019 CN 201911417080
(71) Applicant: Huawei Technologies Co., Ltd., Shenzhen, Guangdong 518129 (CN)
(72) Inventor: LU, Maosheng, Shenzhen, Guangdong 518129 (CN); LIU, Bin, Shenzhen, Guangdong 518129 (CN)
(74) Representative: Pfenning, Meinig & Partner mbB
(86) International application number: PCT/CN2020/116534
(87) International publication number: WO 2021/135416

(57) **Abstract**

Embodiments of this application disclose a load balancing method and a device. A network device performs hash calculation on a first traffic flow to obtain a first hash value corresponding to the first traffic flow, and determines, based on a first mapping relationship between the first hash value and a first member port in a link aggregation group, that an egress port of the first traffic flow is the first member port. The network device determines a current first bandwidth of the first member port, and adjusts the first mapping relationship to a second mapping relationship between the first hash value and a second member port based on the first bandwidth, to forward a subsequently received first traffic flow through the second member port. In this way, a current problem that loads on member ports in the link aggregation group are imbalanced can be overcame, so that the member ports in the link aggregation group carry traffic flows more reasonably and evenly, and the loads on the member ports in the link aggregation group are balanced. Therefore, the network device can meet a requirement of a high bandwidth.

## Description

This application claims priority to Chinese Patent Application No. 201911417080.X, filed with the China National Intellectual Property Administration on December 31, 2019, and entitled "LOAD BALANCING METHOD AND DEVICE", which is incorporated herein by reference in its entirety.

### TECHNICAL FIELD

This application relates to the field of secure communication technologies, and in particular, to a load balancing method and a device. The method is used in a network scenario in which link aggregation exists, to perform load balancing on a plurality of member ports in a link aggregation group.

### BACKGROUND

A network device generally has a plurality of physical ports, but a single physical port can carry a limited physical bandwidth. To enable the network device to have a high bandwidth capability, a link aggregation manner may be used on the network device. To be specific, the plurality of physical ports on the network device form one logical port. A plurality of physical links corresponding to the plurality of physical ports may be referred to as a link aggregation group, and each physical port is referred to as a member port in the link aggregation group. A bandwidth that can be carried by the logical port is a sum of physical bandwidths carried by the plurality of physical ports. For example, it is assumed that 10 physical ports with a bandwidth of 10 G on a switch are converged into one logical port through configuration, and in this case, the logical port has a bandwidth of 100 G. Therefore, the network device can implement a requirement of a high bandwidth in the link aggregation manner.

Currently, when forwarding a traffic flow by using the link aggregation group, the network device usually determines, based on a fixed mapping relationship between a hash value and a member port in the link aggregation group, a member port of a hash value corresponding to the traffic flow in the link aggregation group, and forwards the traffic flow through the determined member port. This causes imbalance of loads on the member ports in the link aggregation group. Consequently, a bandwidth actually provided by the link aggregation group is significantly reduced, and a role played by link aggregation on the network device is significantly degraded.

### SUMMARY

In view of this, embodiments of this application provide a load balancing method and a device. Based on an actual load condition of each member port in a link aggregation group, a load shared by each member port is dynamically adjusted, to balance loads on member ports in the link aggregation group, so that the link aggregation group on a network device can provide as high bandwidth as possible.

According to a first aspect, a load balancing method is provided. The method is applied to a network device. The network device may forward a traffic flow to another network device by using a link aggregation group between the network device and the another network device. A process of performing load balancing on the network device may specifically include: The network device performs hash calculation on a received first traffic flow, to obtain a first hash value corresponding to the first traffic flow; the network device determines, based on the first hash value and a first mapping relationship between the first hash value and a first member port in the link aggregation group, that an egress port of the first traffic flow is the first member port; and in this case, the network device may determine a current first bandwidth of the first member port, adjust the first mapping relationship to a mapping relationship between the first hash value and a second member port based on the first bandwidth, and forward a subsequently received first traffic flow through the second member port. It can be learned that, according to the method provided in this embodiment of this application, in the network device that uses link aggregation, a correspondence between each member port and a hash value can be dynamically adjusted based on a condition of a bandwidth actually carried by each member port in the link aggregation group, so that a problem of imbalanced loads on the member ports caused when a traffic flow is forwarded based on a fixed mapping relationship between a hash value and a member port is overcame, and each member port in the link aggregation group can share a load of the traffic flow based on an adjusted mapping relationship. Therefore, the loads on the member ports in the link aggregation group are balanced, and the network device can meet a requirement of a high bandwidth.

In some specific implementations, the first mapping relationship is adjusted to a second mapping relationship when the first member port meets a first condition. The first condition is used to indicate that a load imbalance situation exists in the link aggregation group, and specifically includes but is not limited to at least one of the following: The first bandwidth is greater than or equal to a first threshold; occupancy of the first bandwidth is greater than or equal to a second threshold, where the occupancy of the first bandwidth is a ratio of the first bandwidth to a bandwidth of a logical port corresponding to the link aggregation group; or a ratio of a difference between the first bandwidth and a second bandwidth to a bandwidth of a single member port in the link aggregation group is greater than or equal to a third threshold, where the second bandwidth is a bandwidth of the second member port before the network device adjusts the first mapping relationship to the second mapping relationship. If the first condition includes at least two of the foregoing three conditions, that any one condition is met may be considered as that the first condition is met or that all the conditions are met may be considered as that the first condition is met. This may be specifically flexibly designed based on an actual requirement. In addition, the network device can periodically obtain a bandwidth of each member port. Once a member port is found to meet the preconfigured first condition, it is determined that a load imbalance problem exists in the link aggregation group and needs to be processed by using the load balancing method provided in this embodiment of this application, so that the loads on the member ports in the link aggregation group are relatively balanced.

In some other possible implementations, when it is determined that the first member port meets the first condition and the current first bandwidth of the first member port needs to be adjusted, a target member port for traffic switching may be selected. Specifically, a member port currently with a smallest bandwidth in the link aggregation group may be selected. For example, the target member port selected in this embodiment of this application is the second member port, and the second member port is a member port currently with a smallest bandwidth in the member ports in the link aggregation group before the network device adjusts the first mapping relationship to the second mapping relationship.

In still some other specific implementations, a member port may be used as a target member port to share a bandwidth carried by the first member port, and the target member port further needs to meet a second condition. For example, when the target member port is the second member port, the network device can adjust the first mapping relationship to the second mapping relationship only when the second member port meets the second condition. The second condition is used to represent a situation that traffic of the first member port can be shared to improve load imbalance in the link aggregation group, and specifically includes but is not limited to at least one of the following: A fifth bandwidth is less than or equal to the first threshold, where the fifth bandwidth is a bandwidth of the second member port after the network device adjusts the first mapping relationship to the second mapping relationship; occupancy of the fifth bandwidth is less than or equal to the second threshold, where the fifth bandwidth is a bandwidth of the second member port after the network device adjusts the first mapping relationship to the second mapping relationship, and the occupancy of the fifth bandwidth is a ratio of the fifth bandwidth to the bandwidth of the logical port corresponding to the link aggregation group; or a ratio of a difference between the fifth bandwidth and a sixth bandwidth to the bandwidth of the single member port in the link aggregation group is less than or equal to the third threshold, where the fifth bandwidth is a bandwidth of the second member port after the network device adjusts the first mapping relationship to the second mapping relationship, and the sixth bandwidth is a bandwidth of the first member port after the network device adjusts the first mapping relationship to the second mapping relationship. In this way, it is ensured that after a part of the bandwidth of the first member port is shared by the second member port, a current bandwidth of the second member port does not cause the load imbalance problem in the link aggregation group, and it is ensured that a case in which reciprocal adjustment between the two member ports cannot improve the load imbalance problem does not occur, so that the load balancing method is more effective.

In yet some other possible implementations, this embodiment of this application may further include: The network device obtains the first mapping relationship and a third mapping relationship, where the first mapping relationship includes a mapping relationship among the first member port, the first hash value, and a first traffic statistics unit, the third mapping relationship includes a mapping relationship among the first member port, a second hash value, and a second traffic statistics unit, and the second hash value is a hash value obtained by performing hash calculation based on a second traffic flow; the network device determines, based on a counting result of the first traffic statistics unit, a third bandwidth that is of the first member port and that is occupied by the first traffic flow; the network device determines, based on a counting result of the second traffic statistics unit, a fourth bandwidth that is of the first member port and that is occupied by the second traffic flow; and the network device determines the first bandwidth based on the third bandwidth and the fourth bandwidth. Each traffic statistics unit may specifically be a counter or token bucket, and is configured to count a quantity of bytes that are mapped to a member port corresponding to the traffic statistics unit by using a hash value corresponding to the traffic statistics unit and that are forwarded through the member port. It should be noted that a traffic statistics unit that is in a one-to-one correspondence with a hash value is added to a mapping relationship, to provide a finer granularity for load adjustment of a same member port. To be specific, traffic flows with different hash values that are mapped to a same member port may be divided and some of the flows may be selectively offloaded, to expand a role of mapping at least two hash values to a same member port in this embodiment of this application, so that a load balancing effect is better. For example, the first mapping relationship may be a mapping relationship among the first member port, the first hash value, and a bandwidth of the first member port that is counted by the first traffic statistics unit, or may be mapping among the first member port, the first hash value, and an identifier of the first traffic statistics unit. In addition, the network device determines the traffic statistics unit by using the identifier of the first flow unit, to determine a traffic counting result of the first traffic statistics unit.

In an example, when the first bandwidth meets the first condition, and the first member port corresponds to the first mapping relationship and the third mapping relationship, a mapping relationship that carries a relatively large bandwidth may be selected for adjustment. In one case, if the third bandwidth determined based on the counting result of the first traffic statistics unit is greater than the fourth bandwidth determined based on the counting result of the second traffic statistics unit, the first mapping relationship between the first hash value and the first member port is selected for adjustment. In this case, subsequent forwarding of the first traffic flow is affected. In another case, if the third bandwidth is less than the fourth bandwidth, the third mapping relationship between the second hash value and the first member port is selected for adjustment. In this case, subsequent forwarding of the second traffic flow is affected. In this way, a mapping relationship corresponding to a part of the bandwidth of the first member port can be flexibly adjusted, so that the link aggregation group rapidly implements load balancing.

In a specific implementation, in this embodiment of this application, after the mapping relationship is adjusted, the load imbalance problem in the link aggregation group can be further improved in a manner of adjusting a hash algorithm. The method may specifically include: The network device receives a third traffic flow, and determines that an egress port that is recorded in a mapping relationship table and that forwards the third traffic flow is a third member port in the link aggregation group, where a mapping relationship between a third hash value and the third member port is recorded in the mapping relationship table, and the third hash value is a hash value obtained by performing hash calculation on the third traffic flow by using a first hash algorithm; then the network device determines that a current seventh bandwidth of the third member port is greater than or equal to a fourth threshold, and adjusts the first hash algorithm to a second hash algorithm; and in this case, the network device may perform hash calculation on the third traffic flow based on the second hash algorithm to obtain a fourth hash value, and determine, based on a mapping relationship that is between the fourth hash value and a fourth member port and that is recorded in the mapping relationship table, to forward the third traffic flow through the fourth member port.

That the network device adjusts the first hash algorithm to a second hash algorithm includes but is not limited to at least one of the following manners: adjusting a byte sequence of at least one characteristic parameter in the first traffic flow; adjusting an arrangement sequence of characteristic parameters in the first traffic flow; or adjusting a value of a hash factor. The characteristic parameters include at least one of a destination address DA, a source address SA, a destination internet protocol address DIP, and a source internet protocol address SIP of the first traffic flow.

In this implementation, in an example, the third member port may be the first member port; and the fourth member port may be the second member port.

It can be learned that, in this implementation, in the network device that uses link aggregation, the two dynamic adjustment manners can be combined based on the condition of the bandwidth actually carried by each member port in the link aggregation group. In other words, a member port corresponding to a hash value in a mapping relationship can be dynamically adjusted, and a hash algorithm (for example, a value of a hash factor) for calculating a hash value corresponding to a traffic flow can be dynamically adjusted, to change the hash value corresponding to the traffic flow, so that a plurality of traffic flows that are originally mapped to a same member port are mapped to different member ports. Therefore, in this implementation, a problem of imbalanced loads on the member ports caused when a traffic flow is forwarded based on a fixed hash algorithm for calculating a hash value of the traffic flow and a determined mapping relationship between the hash value and a member port is overcame, so that it is possible to balance the loads on the member ports in the link aggregation group to some extent, and the network device can meet the requirement of a high bandwidth.

It should be noted that, in this embodiment of this application, alternatively, the load balancing method implemented by adjusting a hash algorithm for calculating a hash value of a traffic flow may be performed first, and then the load balancing method implemented by adjusting a member port corresponding to a hash value in a mapping relationship is performed. A performing sequence between the two methods is not specifically limited in this embodiment, and a specific performing sequence may be determined based on an actual load condition or preconfiguration.

It should be noted that, in this embodiment of this application, a specific process of performing hash calculation on a traffic flow to obtain a hash value corresponding to the traffic flow may include: extracting a characteristic parameter of the traffic flow, and performing hash calculation on the characteristic parameter (or the characteristic parameter and a hash factor), to obtain a 32-bit hash value; and taking last N bits of the 32-bit hash value as the hash value corresponding to the traffic flow, where N is a positive integer, and a quantity of member ports included in the link aggregation group is less than an N^{th} power of 2. In this way, it is ensured that each member port has at least two corresponding hash values; in other words, each member port has at least two corresponding mapping relationships, so that load balancing in this embodiment of this application is performed more flexibly and effectively.

According to a second aspect, a load balancing method is provided. The method is applied to a network device. The network device may forward a traffic flow to another network device by using a link aggregation group between the network device and the another network device. A process of performing load balancing on the network device may specifically include: The network device performs hash calculation on a received first traffic flow by using a first hash algorithm, to obtain a first hash value corresponding to the first traffic flow; the network device determines, based on a mapping relationship that is between the first hash value and a first member port in the link aggregation group and that is recorded in a mapping relationship table, that an egress port of the first traffic flow is the first member port; in this case, the network device may determine a current first bandwidth of the first member port, and adjust the first hash algorithm to a second hash algorithm when determining that the first bandwidth is greater than or equal to a preset threshold; and then the network device performs hash calculation on a subsequently received first traffic flow by using the second hash algorithm, to obtain a second hash value, and the network device determines, based on a mapping relationship that is between the second hash value and a second member port in the link aggregation group and that is in the mapping relationship table, to forward the first traffic flow through the second member port. It can be learned that, according to the method provided in this embodiment of this application, in the network device that uses link aggregation, a hash algorithm (for example, a value of a hash factor) for calculating a hash value of a traffic flow can be dynamically adjusted based on a condition of a bandwidth actually carried by each member port in the link aggregation group, to change the hash value corresponding to the traffic flow, so that a plurality of traffic flows that are originally mapped to a same member port are mapped to different member ports. Therefore, a problem of imbalanced loads on the member ports caused when a traffic flow is forwarded based on a fixed hash algorithm for calculating a hash value of the traffic flow and a determined mapping relationship between the hash value and a member port is overcame, so that it is possible to balance the loads on the member ports in the link aggregation group to some extent, and the network device can meet the requirement of a high bandwidth.

According to a third aspect, this application further provides a network device. The network device includes a transceiver unit and a processing unit. The transceiver unit is configured to perform a transmitting/receiving operation in the method provided in the first aspect or the second aspect; and the processing unit is configured to perform another operation other than the transmitting/receiving operation in the first aspect or the second aspect. For example, when the network device performs the method provided in the first aspect, the transceiver unit is configured to receive a first traffic flow; the transceiver unit is further configured to forward the first traffic flow through a second member port; the processing unit is configured to perform hash calculation on the received first traffic flow to obtain a first hash value corresponding to the first traffic flow; the processing unit is further configured to determine, based on the first hash value and a first mapping relationship between the first hash value and a first member port in a link aggregation group, that an egress port of the first traffic flow is the first member port; the processing unit is further configured to determine a current first bandwidth of the first member port; and the processing unit is further configured to adjust the first mapping relationship to a mapping relationship between the first hash value and a second member port based on the first bandwidth. For another example, when the network device performs the method provided in the second aspect, the transceiver unit is configured to receive a first traffic flow; the transceiver unit is further configured to forward the first traffic flow through a second member port; the processing unit is configured to perform hash calculation on the received first traffic flow by using a first hash algorithm, to obtain a first hash value corresponding to the first traffic flow; the processing unit is further configured to determine, based on a mapping relationship that is between the first hash value and a first member port in a link aggregation group and that is recorded in a mapping relationship table, that an egress port of the first traffic flow is the first member port; the processing unit is further configured to determine a current first bandwidth of the first member port; the processing unit is further configured to adjust the first hash algorithm to a second hash algorithm when it is determined that the first bandwidth is greater than or equal to a preset threshold; the processing unit is further configured to perform hash calculation on a subsequently received first traffic flow by using the second hash algorithm, to obtain a second hash value; and the network device determines, based on a mapping relationship that is between the second hash value and the second member port in the link aggregation group and that is in the mapping relationship table.

According to a fourth aspect, an embodiment of this application further provides a network device. The network device includes a communication interface and a processor. The communication interface is configured to perform a transmitting/receiving operation in the method provided in the first aspect or the second aspect; and the processor is configured to perform another operation other than the transmitting/receiving operation in the method provided in the first aspect or the second aspect.

According to a fifth aspect, an embodiment of this application further provides a network device, where the network device includes a memory and a processor. The memory is configured to store program code; and the processor is configured to run instructions in the program code, to enable the network device to perform the method provided in the first aspect or the second aspect.

According to a sixth aspect, an embodiment of this application further provides a computer-readable storage medium. The computer-readable storage medium stores instructions, and when the instructions are run on a computer, the computer is enabled to perform the load balancing method provided in the first aspect or the second aspect.

According to a seventh aspect, an embodiment of this application further provides a computer program product, and when the computer program product runs on a computer, the computer is enabled to perform the load balancing method provided in the first aspect or the second aspect.

### BRIEF DESCRIPTION OF DRAWINGS

FIG. 1 is a schematic diagram of a network system framework in an application scenario according to an embodiment of this application;
FIG. 2 is a schematic diagram of a load sharing example in the scenario shown in FIG. 1 according to an embodiment of this application;
FIG. 3 is a schematic diagram of a structure of a PTN device 106 in the scenario shown in FIG. 1 according to an embodiment of this application;
FIG. 4 is a schematic flowchart of a load balancing method 100 according to an embodiment of this application;
FIG. 5 is a schematic flowchart of another load balancing method 200 according to an embodiment of this application;
FIG. 6 is a schematic diagram of a hash key value in a first hash algorithm according to an embodiment of this application;
FIG. 7 is a schematic diagram of a hash key value in another first hash algorithm according to an embodiment of this application;
FIG. 8a is a schematic diagram of a hash key value in a second hash algorithm according to an embodiment of this application;
FIG. 8b is a schematic diagram of a hash key value in another second hash algorithm according to an embodiment of this application;
FIG. 8c is a schematic diagram of a hash key value in still another second hash algorithm according to an embodiment of this application;
FIG. 9a is a schematic diagram of a hash key value in yet another second hash algorithm according to an embodiment of this application;
FIG. 9b is a schematic diagram of a hash key value in another second hash algorithm according to an embodiment of this application;
FIG. 10 is a schematic diagram of a structure of a network device 1000 according to an embodiment of this application;
FIG. 11 is a schematic diagram of a structure of a network device 1100 according to an embodiment of this application; and
FIG. 12 is a schematic diagram of a structure of a network device 1200 according to an embodiment of this application.

### DESCRIPTION OF EMBODIMENTS

As a requirement for a bandwidth carried by a port on a network device continuously increases, a link aggregation manner is usually used on the network device. To be specific, at least two physical ports of the network device form one logical port, and a bandwidth that can be carried by the logical port is a sum of bandwidths carried by the physical ports corresponding to the logical port. It can be learned that a capability of the network device to carry a bandwidth can be effectively improved in the link aggregation manner. It should be noted that a link aggregation group is a set of a plurality of physical links that participate in link aggregation and that are between two network devices connected in a link aggregation manner. All physical ports aggregated into a logical port on the network device may be referred to as member ports in the link aggregation group.

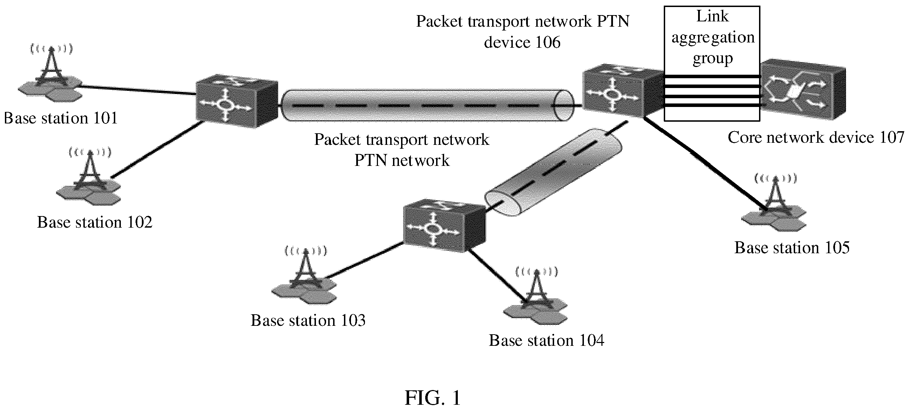

For example, a packet transport network (English: Packet transport network, PTN for short) scenario shown in FIG. 1 is used as an example. In this scenario, a base station 101 to a base station 105 separately directly or indirectly access a PTN device 106, and are converged into a core network device 107 by using the PTN device 106. All traffic flows sent by a plurality of base stations need to be converged by the PTN device 106 to a core network side. Therefore, the network device 106 needs to be able to carry a relatively large bandwidth. In this case, a link aggregation group may be disposed between the PTN device 106 and the core network device 107. To be specific, a port 1, a port 2, a port 3, and a port 4 on the PTN device 106 are converged into one logical port A, a port 5, a port 6, a port 7, and a port 8 on the core network device 107 are also converged into one logical port B, and the port 1, the port 2, the port 3, and the port 4 are respectively connected to the port 5, the port 6, the port 7, and the port 8 by using four optical fibers. It is assumed that a bandwidth (also referred to as an allowable maximum physical bandwidth of a physical port connected to an optical fiber) that can be carried by each of the foregoing optical fibers is 1 G. The link aggregation group between the PTN device 106 and the core network device 107 has a bandwidth of 4 G. In other words, the PTN device 106 can carry a relatively large bandwidth.

In an example, when receiving a traffic flow whose egress port is the link aggregation group, the network device first extracts a characteristic parameter (for example, at least one of a destination address (English: Destination Address, DA for short), a source address (English: Source Address, SA for short), a destination internet protocol address (English: Destination Internet Protocol Address, DIP for short), and a source internet protocol address (English: Source Internet Protocol Address, SIP for short) of a packet in the traffic flow) of the traffic flow, calculates a hash value of the traffic flow based on the characteristic parameter, determines a member port corresponding to the calculated hash value based on a fixed mapping relationship between the hash value and the member port in the link aggregation group, and forwards the traffic flow through the member port.

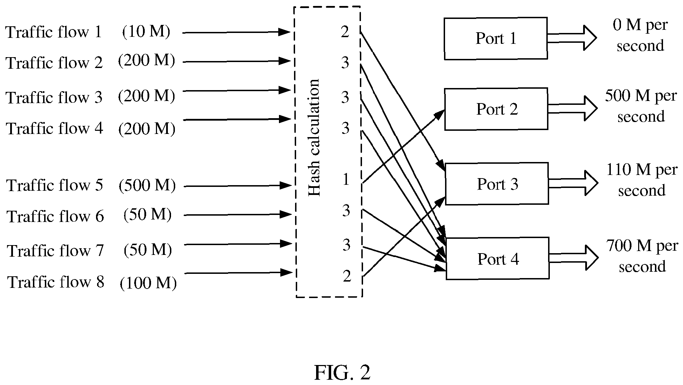

The scenario shown in FIG. 1 is still used as an example. It is assumed that four mapping relationships are prestored on the PTN device 106: a mapping relationship 1 between a hash value 1 and the port 1, a mapping relationship 2 between a hash value 2 and the port 2, a mapping relationship 3 between a hash value 3 and the port 3, and a mapping relationship 4 between a hash value 4 and the port 4. As shown in FIG. 2, it is assumed that the PTN device 106 receives traffic flows 1 to 8, and egress ports of the traffic flows 1 to 8 are all the link aggregation group. A process of performing load sharing in the link aggregation group in the foregoing manner may specifically include: The PTN device 106 extracts a characteristic parameter of each of the traffic flows 1 to 8 and calculates hash values 2, 3, 3, 3, 1, 3, 3, and 2; the PTN device 106 stores four mapping relationships, for example, as shown in Table 1; and the PTN device 106 may determine, based on Table 1, that the traffic flows 1 and 8 are sent to the core network device 107 through the port 3, the traffic flows 2, 3, 4, 6, and 7 are sent to the core network device 107 through the port 4, and the traffic flow 5 is sent to the core network device 107 through the port 2. In this way, bandwidths on the port 1 to the port 4 are respectively 0 M, 500 M, 110 M, and 700 M.

**Table 1 Mapping table**

| Hash value | Member port |
|---|---|
| 0 | 1 |
| 1 | 2 |
| 2 | 3 |
| 3 | 4 |

It can be learned that, if load sharing is performed in the foregoing manner, it is very likely that a same hash value is calculated for a plurality of traffic flows, and therefore the plurality of traffic flows are mapped to a same member port. Consequently, a load on the member port is excessively large. In addition, even if the traffic flows may be evenly distributed to different member ports, loads on the member ports in the link aggregation link may be imbalanced because each traffic flow has a large flow difference. In other words, when load sharing is performed based on a fixed mapping relationship between a hash value and a member port, it is very likely that the loads on the member ports in the link aggregation link may be imbalanced. Consequently, a bandwidth actually provided by the link aggregation group is greatly reduced. For example, on the PTN device 106, the port 4 carries the bandwidth of 700 M, which exceeds 50% of 1 G (a preset value). In this case, the PTN device 106 cannot carry another traffic flow by using the link aggregation group. Consequently, the link aggregation group totally carries a bandwidth of (0 M+500 M+110 M+700 M)=1310 M, which is far less than 50% of a total bandwidth (that is, 4 G) of the logical port of the link aggregation group.

In view of this, an embodiment of this application provides a load balancing method. A load shared by each member port is dynamically adjusted based on an actual load condition of each member port in a link aggregation group, so that loads on member ports in the link aggregation group are balanced. A specific process may include: A network device performs hash calculation on a first traffic flow to obtain a first hash value corresponding to the first traffic flow, and determines, based on a first mapping relationship between the first hash value and a first member port in the link aggregation group, that an egress port of the first traffic flow is the first member port; and in this case, the network device determines a current first bandwidth of the first member port, and adjusts the first mapping relationship to a second mapping relationship between the first hash value and a second member port based on the first bandwidth, to forward a subsequently received first traffic flow through the second member port. In this way, a current problem of imbalanced loads on the member ports caused when a traffic flow is forwarded based on a fixed mapping relationship between a hash value and a member port can be overcame, so that the member ports in the link aggregation group can share loads of the traffic flow based on a properer mapping relationship that is obtained after adjustment is performed based on a current actual load condition. Therefore, the loads on the member ports in the link aggregation group are balanced, and the network device can meet a requirement of a high bandwidth.

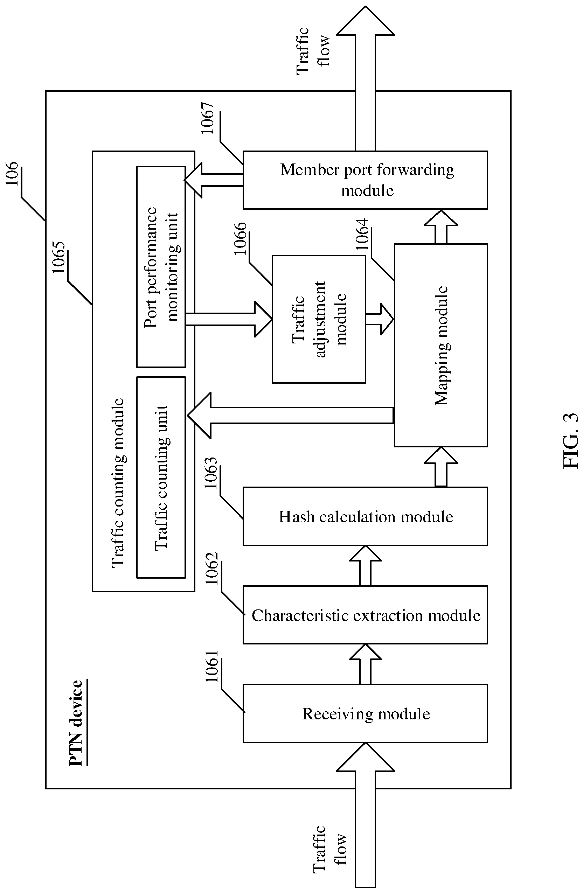

For example, the scenario shown in FIG. 1 is still used as an example. In this embodiment of this application, refer to FIG. 3. The PTN device 106 may include a receiving module 1061, a characteristic extraction module 1062, a hash calculation module 1063, a mapping module 1064, a traffic counting module 1065, a traffic adjustment module 1066, and a member port forwarding module 1067. A specific load balancing process may include: S11: The receiving module 1061 of the PTN device 106 receives traffic flows sent by the base station 101 to the base station 105. S12: The characteristic extraction module 1062 extracts a DA and an SA of each traffic flow, and sends the DA and the SA to the hash calculation module 1063. S13: The hash calculation module 1063 calculates, based on the DA and the SA of each traffic flow, a 32-bit hash value corresponding to each traffic flow, takes last four bits of the 32-bit hash value as a final hash value corresponding to the traffic flow, and sends the final hash value to the mapping module 1064. S14: The mapping module 1064 determines a corresponding egress port for each traffic flow based on a current mapping table 1, and the member port forwarding module 1067 forwards a corresponding traffic flow to the core network device 107 through the determined egress port. S15: A port performance monitoring unit in the traffic counting module 1065 is connected to the member port forwarding module 1067 to monitor traffic actually forwarded by each member port, and the PTN device 106 collects a value of the port performance monitoring unit once a second by using software, and calculates a bandwidth of each member port. S16: A traffic statistics unit in the traffic counting module 1065 is connected to the mapping module 1604, to count the flow actually forwarded by each member port, and the PTN device 106 reads a value of each traffic statistics unit in a mapping table 2 in the mapping module 1604 once a second by using software, and calculates the bandwidth of each member port, where usually, for a same member port, a bandwidth obtained based on the port performance monitoring unit and a bandwidth obtained based on the traffic statistics unit are the same in a same condition. S17: The traffic adjustment module 1066 determines, based on a current bandwidth of each member port that is obtained by the traffic counting module 1065, that a total bandwidth of the member port 1 is 900 M, which exceeds 80% of a maximum physical bandwidth of a single port. S18: The traffic adjustment unit 1066 determines, based on values 100 M, 200 M, 300 M, and 200 M in the traffic statistics units 0, 4, 8, and 12, to take a mapping item corresponding to the traffic statistics unit 8 with a largest bandwidth (namely, 300 M per second) as a to-be-adjusted mapping item (that is, a bold mapping item in the mapping table 1). S19: The traffic adjustment unit 1066 selects the member port 2 with a smallest bandwidth from member ports whose current bandwidths do not exceed 80% of the maximum physical bandwidth (that is, a bandwidth of 1 G) of the single port, and determines that the bandwidth of the member port 2 does not exceed 80% of the maximum physical bandwidth of the single port if a traffic flow in the to-be-adjusted mapping item is switched to the member port 2. S20: The traffic adjustment unit 1066 modifies the member port 1 of the to-be-adjusted mapping item in the mapping table 1 in the mapping module 1064 to the member port 2, that is, updates the mapping table 1 in the mapping module 1064 to the mapping table 2. S21: When the receiving module 1061 of the PTN device 106 receives a traffic flow corresponding to a hash value 8 again, the PTN device 106 forwards the traffic flow to the core network device 107 through the member port 2 based on the mapping table 2, and adds a bandwidth of the traffic flow to the traffic statistics unit 8 corresponding to the member port 2. It can be learned that the loads on the member ports in the link aggregation group are balanced according to the method provided in this embodiment of this application.

In an example, for the mapping table 1 and the mapping table 2, refer to the following Table 2 and Table 3:

**Table 2 Mapping table 1**

| Hash value | Member port | Traffic statistics unit | Hash value | Member port | Traffic statistics unit |
|---|---|---|---|---|---|
| 0 | 1 | 0 (100 M) | **8** | **1** | **8** (300 M) |
| 1 | 2 | 1 | 9 | 2 | 9 |
| 2 | 3 | 2 | 10 | 3 | 10 |
| 3 | 4 | 3 | 11 | 4 | 11 |
| 4 | 1 | 4 (200 M) | 12 | 1 | 12 (200 M) |
| 5 | 2 | 5 | 13 | 2 | 13 |
| 6 | 3 | 6 | 14 | 3 | 14 |
| 7 | 4 | 7 | 15 | 4 | 15 |

**Table 3 Mapping table 2**

| Hash value | Member port | Traffic statistics unit | Hash value | Member port | Traffic statistics unit |
|---|---|---|---|---|---|
| 0 | 1 | 0 (100 M) | **8** | **2** | **8** (300 M) |
| 1 | 2 | 1 | 9 | 2 | 9 |
| 2 | 3 | 2 | 10 | 3 | 10 |
| 3 | 4 | 3 | 11 | 4 | 11 |
| 4 | 1 | 4 (200 M) | 12 | 1 | 12 (200 M) |
| 5 | 2 | 5 | 13 | 2 | 13 |
| 6 | 3 | 6 | 14 | 3 | 14 |
| 7 | 4 | 7 | 15 | 4 | 15 |

The traffic statistics units 0 to 15 in the mapping table may be identifiers of the traffic statistics units, and are used to indicate corresponding traffic statistics units. For example, when the network device receives a traffic flow 1 with a hash value of 0 and a bandwidth of 100 M, the network device determines, based on the mapping table 1 or 2, that an egress port of the traffic flow 1 is the member port 1, and a traffic statistics unit is a traffic statistics unit with an identifier 0. In this case, the network device adds 100 M bytes to the traffic statistics unit with the identifier 0 while forwarding the traffic flow 1 through the member port 1. For another example, in an obtaining period, the network device can check the mapping table 1 or 2 when determining a current bandwidth of the member port 1, to determine that traffic statistics units corresponding to the member port 1 are traffic statistics units whose identifiers are separately 0, 4, 8, and 12. In this case, the network device can find the four traffic statistics units whose identifiers are 0, 4, 8, and 12, read values in the traffic statistics units, and sum up the four read values, and an obtained sum is the current bandwidth of the member port 1.

It should be noted that, in another example, each traffic statistics unit in the mapping table may alternatively directly store a counted quantity of forwarded bytes. For example, before adjustment, as shown in the following Table 4, a mapping relationship corresponding to the member port 1 may be as follows:

**Table 4 Parts corresponding to the member port 1 in the mapping table 1**

| Hash value | Member port | Traffic statistics unit |
|---|---|---|
| 0 | 1 | 100 M |
| 4 | 1 | 200 M |
| 8 | 1 | 300 M |
| 12 | 1 | 400 M |

It may be understood that the foregoing scenario is merely a scenario example provided in the embodiments of this application, and the embodiments of this application are not limited to this scenario.

It should be noted that the network device in this embodiment of this application may be specifically a switch, a router, a PTN device, or the like. Link aggregation may be applied between any network devices with a relatively large bandwidth requirement, for example, a core network device is connected in a link aggregation manner on a server or a server group connected to a core network.

It should be noted that, in this embodiment of this application, maximum physical bandwidths of all the member ports in the link aggregation group are consistent, for example, the maximum physical bandwidth that can be carried by each member port is 1 G.

With reference to accompanying drawings, the following describes in detail specific implementations of a load balancing method in embodiments of this application by using embodiments.

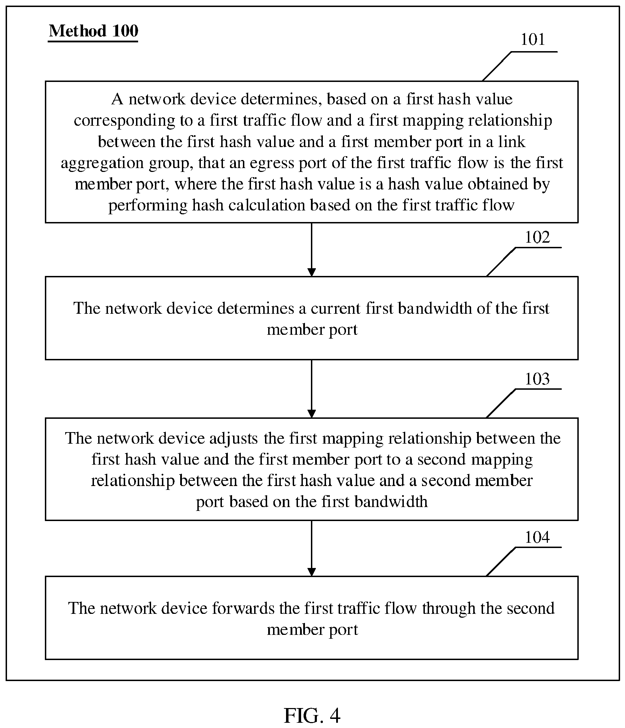

FIG. 4 is a schematic flowchart of a load balancing method 100 according to an embodiment of this application. Refer to FIG. 4. The method 100 is applied to a network device on which a link aggregation group is disposed. A mapping relationship of the link aggregation group is preestablished and stored on the network device, and the mapping relationship indicates a member port that is in the link aggregation group and that is configured to forward a traffic flow. For example, in the network shown in FIG. 1, for a traffic flow sent from a base station to a core network, the method 100 may be applied to the PTN device 106. For a traffic flow sent from a core network to a base station, the method 100 may also be applied to the core network device 107. For example, the method 100 may include the following S101 to S104.

S101: The network device determines, based on a first hash value corresponding to a first traffic flow and a first mapping relationship between the first hash value and a first member port in the link aggregation group, that an egress port of the first traffic flow is the first member port, where the first hash value is a hash value obtained by performing hash calculation based on the first traffic flow.

To balance loads on member ports in the link aggregation group on the network device, the mapping relationship of the link aggregation group is usually preconfigured on the network device. The mapping relationship may represent a correspondence between a hash value and a member port, or may represent a correspondence among a hash value, a member port, and a traffic statistics unit. The mapping relationship may be configured and stored on the network device in a form of a mapping table.

In this embodiment of this application, to enable different traffic flows to be distributed to and correspond to different egress ports, a quantity of mapping items in the mapping relationship is increased. To be specific, in the mapping relationship, each member port corresponds to at least two mapping items, and hash values corresponding to mapping items in the mapping relationship are different; in other words, one hash value appears only once in the mapping relationship of the link aggregation group. Because a 32-bit calculation result is obtained by performing hash calculation based on a characteristic parameter of a traffic flow, last N bits may be extracted as a hash value corresponding to the traffic flow, and a total of 2^{N} possible hash values are obtained, where N is a positive integer, and that 2^{N}>Quantity of member ports included in the link aggregation group is met. For example, if the link aggregation group of the network device includes 16 member ports, N needs to be an integer greater than 4. When N=5, the mapping relationship preconfigured on the network device includes 2⁵=32 mapping items, and each member port corresponds to two different hash values. When N=8, the mapping relationship preconfigured on the network device includes 2⁸=256 mapping items, and each member port corresponds to 16 different hash values. It should be noted that N is a value that is set by a user based on an actual requirement. A larger value of N indicates a smaller probability that different traffic flows correspond to a same hash value, and loads on the network device are more balanced.

For example, it is assumed that the network device includes four member ports and N is 4. The preconfigured mapping relationship may include 16 mapping relationships corresponding to a total of 16 hash values 0 to 15 (in the following descriptions, one mapping relationship corresponding to one hash value is also referred to as one mapping item), and each member port corresponds to four different hash values. For details, refer to the following Table 5.

**Table 5 Mapping relationship**

| Hash value | Member port | Hash value | Member port |
|---|---|---|---|
| 0 | 1 | 8 | 1 |
| 1 | 2 | 9 | 2 |
| 2 | 3 | 10 | 3 |
| 3 | 4 | 11 | 4 |
| 4 | 1 | 12 | 1 |
| 5 | 2 | 13 | 2 |
| 6 | 3 | 14 | 3 |
| 7 | 4 | 15 | 4 |

For another example, to enable the mapping relationship to reflect a bandwidth of a traffic flow that is mapped to each member port by using a specific hash value, based on Table 5, one traffic statistics unit may be further added for each mapping item; in other words, a traffic statistics unit 0 to a traffic statistics unit 15 are added. For details, refer to Table 2 or Table 3.

In this embodiment of this application, the link aggregation group on the network device includes at least the first member port and a second member port, and mapping items of the first member port include at least the first mapping relationship and a third mapping relationship. In an example, the first mapping relationship represents a relationship between the first member port and the first hash value, and the third mapping relationship represents a relationship between the first member port and a second hash value. In another example, the first mapping relationship represents a relationship among the first member port, the first hash value, and a first traffic statistics unit. The third mapping relationship represents a relationship among the first member port, the second hash value, and a second traffic statistics unit. In an example, a mapping relationship may be a mapping relationship among a member port, a hash value, and a bandwidth of the member port that is counted by a traffic statistics unit, or a mapping relationship may be mapping among a member port, a hash value, and an identifier of a traffic statistics unit, and the network device determines the traffic statistics unit by using the identifier of the traffic unit, to determine a traffic counting result of the traffic statistics unit.

In a specific implementation, when the network device receives the first traffic flow, S101 may specifically include: The network device obtains a hash key value based on the first traffic flow, and calculates a hash value A based on the hash key value, where the hash value A is a 32-bit number; then the network device selects last N bits of the hash value A, and records the last N bits as the first hash value; and then the network device determines, based on the preconfigured mapping relationship, a mapping item (namely, the first mapping relationship) corresponding to the first hash value, and uses the first member port in the mapping item as the egress port of the first traffic flow.

In an example, the hash key value of the first traffic flow may include a characteristic parameter of the first traffic flow, that is, at least one of a DA, an SA, a DIP, and a SIP of the first traffic flow. In this case, the network device may use the characteristic parameter as the hash key value, and calculates the 32-bit hash value A.

In another example, in addition to including the characteristic parameter of the first traffic flow, the hash key value of the first traffic flow may further include a hash factor defined on the network device; in other words, both the hash factor and the characteristic parameter are used as the hash key value, to calculate the 32-bit hash value A. The hash factor may be a variable that is correspondingly set on the network device by the user for the link aggregation group, and may be specifically a generated random number or a value specified by the user.

For example, it is assumed that the network device in S101 is the PTN device 106, the mapping relationship configured on the network device is the mapping table 1, the PTN device 106 receives the traffic flow 1 and extracts characteristic parameters of the traffic flow 1: a DA 1 and an SA 1, and a hash factor defined in the PTN device 106 is 5. In this case, the PTN device 106 may perform hash calculation based on the DA 1, the SA 1, and 5, to obtain a 32-bit hash value X; the PTN device 106 extracts last four bits 0011 of the hash value X, to obtain a hash value 3; and the PTN device 106 determines, based on first three columns of a fifth row in Table 1, that the egress port of the traffic flow 1 is the member port 4. Corresponding to this instance, the first traffic flow in S101 is the traffic flow 1, the first hash value is the hash value 3, and the first member port is the port 4.

S102: The network device determines a current first bandwidth of the first member port.

The first bandwidth is traffic forwarded through the first member port in a current unit time, and is used to represent a current load condition of the first member port. In this embodiment of this application, the network device may periodically obtain traffic of each member port in the link aggregation group by using software, and calculate a corresponding bandwidth based on an obtaining period and forwarded traffic, to determine an actual load condition of each member port. The first member port is used as an example to describe a method for determining a current bandwidth of each member port in this embodiment of this application.

In an example, the network device may include traffic statistics units that are in a one-to-one correspondence with hash values, and the network device may periodically obtain, by using software, a counting result (namely, a quantity of forwarded bytes) of each traffic statistics unit corresponding to the first member port, so that the network device can determine the current first bandwidth of the first member port based on an obtaining period and the counting result.

The traffic statistics unit is configured to count traffic of a member port corresponding to each hash value. For example, the traffic statistics unit is configured to count a quantity of bytes in a packet forwarded by a member port corresponding to each hash value. In an example, the traffic statistics unit may be a counter or a token bucket.

In an implementation in which a counter is used as a traffic statistics unit, in one case, the traffic statistics unit may be a counter that continuously accumulates, and after the network device reads a value of the counter in each period, a value read in a previous period needs to be subtracted from the currently read value, to obtain a quantity that is of bytes forwarded by a member port corresponding to the traffic statistics unit and that is counted by the traffic statistics unit in the period; and in another case, the traffic statistics unit may alternatively be a counter that is synchronously reset, and when the network device reads a value of the counter in each period, the counter performs a reset operation, to ensure that a value read each time is a quantity that is of bytes forwarded by a member port corresponding to the traffic statistics unit and that is counted by the traffic statistics unit in the period.

In an implementation in which a token bucket is used as a traffic statistics unit, each hash value corresponds to one token bucket, and a maximum quantity of tokens that can be accommodated by each token bucket is the same, for example, 800 M tokens. In this case, when the network device receives a first traffic flow of 100 M bytes, 100 M tokens are generated. In addition, when it is determined, in S101, that the egress port of the first traffic flow is the first member port corresponding to the first hash value, in a token bucket corresponding to the first hash value, 100 M tokens are deleted from the 800 M tokens, and 700 M tokens are left. By analogy, tokens are decreased in this way. In each obtaining period, a quantity of currently remaining tokens in the token bucket is read, and the quantity of remaining tokens is subtracted from the maximum quantity of tokens that can be accommodated by the token bucket, to obtain a counting result. In addition, the counting result is divided by the obtaining period, to obtain a bandwidth corresponding to the hash value. It should be noted that the token bucket further needs to be set (that is, a quantity of tokens in the token bucket is recovered to the maximum quantity of tokens that the token bucket can hold) when the quantity of remained tokens is read in each obtaining period, so that the token bucket can still be used to count a bandwidth of a member port in a next obtaining period.

In a specific implementation, when the first member port corresponds to the first mapping relationship and the third mapping relationship, the first mapping relationship is a relationship among the first member port, the first hash value, and the first traffic statistics unit, and the third mapping relationship is a relationship among the first member port, the second hash value, and the second traffic statistics unit, where the second hash value is a hash value obtained by performing hash calculation based on a second traffic flow. In this case, the network device may separately read a counting result of the first traffic statistics unit and a counting result of the second traffic statistics unit in each obtaining period (for example, 1 second), determine a third bandwidth based on the counting result of the first traffic statistics unit, and determine a fourth bandwidth based on the counting result of the second traffic statistics unit, to determine the first bandwidth based on the third bandwidth and the fourth bandwidth. That the network device determines a third bandwidth based on the counting result of the first traffic statistics unit may specifically include: The network device obtains the third bandwidth by dividing the counting result of the first traffic statistics unit by the obtaining period. That the network device determines a fourth bandwidth based on the counting result of the second traffic statistics unit may specifically include: The network device obtains the fourth bandwidth by dividing the counting result of the second traffic statistics unit by the obtaining period. When the first member port corresponds to only the first mapping relationship and the third mapping relationship, the first bandwidth is equal to a sum of the third bandwidth and the fourth bandwidth. Alternatively, when the first member port further corresponds to another mapping relationship or other more mapping relationships in addition to the first mapping relationship and the third mapping relationship, the first bandwidth is equal to a sum of the third bandwidth, the fourth bandwidth, and another bandwidth or other more bandwidths obtained based on one or more traffic statistics units corresponding to the another mapping relationship or the other more mapping relationships.

In another example, the network device may further include a port performance monitoring unit. The port performance monitoring unit may monitor a quantity of bytes forwarded per unit time on the first member port in real time, and the network device may periodically obtain, by using software, the quantity of forwarded bytes that is recorded by the port performance monitoring unit, so that the network device can determine the current first bandwidth of the first member port based on an obtaining period and the quantity of forwarded bytes.

In still another example, alternatively, the network device may simultaneously enable the port performance monitoring unit and the traffic statistics unit, and the network device may periodically obtain, by using software, a value of the port performance monitoring unit and a counting result of each traffic statistics unit corresponding to the first member port, to determine the current first bandwidth of the first member port based on an obtaining period and an obtained specific value. It should be noted that when a same obtaining period is used, for a same member port in a same period, a quantity of forwarded bytes that is monitored by the port performance monitoring unit and a quantity of forwarded bytes that is counted by the traffic statistics unit are usually consistent. Accuracy and reliability of the two bandwidth obtaining methods can be mutually verified if the port performance monitoring unit and the traffic statistics units are simultaneously enabled.

S103: The network device adjusts the first mapping relationship between the first hash value and the first member port to a second mapping relationship between the first hash value and a second member port based on the first bandwidth.

It should be noted that, to flexibly adjust, based on the actual load condition of each member port, the mapping relationship corresponding to the link aggregation group, and to balance the loads on the member ports in the link aggregation group, in this embodiment of this application, a bandwidth of each member port is periodically obtained. When it is determined that a current bandwidth of a member port meets a first condition, S103 is performed. The first condition may specifically include at least one of the following conditions: Condition 1: The first bandwidth is greater than or equal to a first threshold. Condition 2: Occupancy of the first bandwidth is greater than or equal to a second threshold, where the occupancy of the first bandwidth is a ratio of the first bandwidth to a bandwidth of a logical port corresponding to the link aggregation group. Condition 3: A ratio of a difference between the first bandwidth and a second bandwidth to a bandwidth of a single member port in the link aggregation group is greater than or equal to a third threshold, where the second bandwidth is a bandwidth of the second member port before the network device adjusts the first mapping relationship to the second mapping relationship.

In an example, if the first condition is the condition 1, that is, the current first bandwidth of the first member port is greater than the first threshold, S103 may be performed. The first threshold is a preset bandwidth threshold, and is used to indicate an allowable maximum bandwidth carried by a single member port. For example, a physical bandwidth of each member port is 1 G, and the preset first threshold may be any bandwidth value less than or equal to 1 G, for example, 800 M.

In another example, the first condition is the condition 2, that is, if the current occupancy of the first bandwidth of the first member port is greater than or equal to the second threshold, S103 may be performed. The second threshold is a preset occupancy threshold, and is used to indicate a ratio of the allowable maximum bandwidth carried by a single member port to the bandwidth of the logical port of the link aggregation group in which the single member port is located. For example, if the bandwidth of the logical port of the link aggregation group of the network device is 100 G, the first bandwidth is 8.5 G, and the second threshold is preset to 8%, because 8.5 G>100 G×8%, it is determined that a load on the first member port is excessively large, and a mapping relationship corresponding to the first member port needs to be adjusted.

In this example, the network device may perform the following operations to specifically determine to-be-adjusted content: S31: The network device selects a to-be-adjusted mapping item from a plurality of mapping items corresponding to the first member port. S32: The network device determines, from other member ports than the first member port in the link aggregation group and for traffic that is in the first member port and that corresponds to the to-be-adjusted mapping item, a target member port to be switched to.

If the mapping relationship configured on the network device includes a correspondence among a hash value, a member port, and a traffic statistics unit, S31 may be specifically: The network device checks quantities of forwarded bytes that are counted by corresponding traffic statistics units in the plurality of mapping items corresponding to the first member port, and successively selects, in descending order of the quantities of forwarded bytes, a mapping item in which a corresponding traffic statistics unit is located as the to-be-adjusted mapping item, until a ratio of a bandwidth of the first member port to the bandwidth of the logical port does not exceed the second threshold after adjustment. For example, the first member port corresponds to two mapping items: a mapping item 1 "the first hash value-the first member port-the first traffic statistics unit" and a mapping item 2 "the second hash value-the first member port-the second traffic statistics unit". The network device checks respective values 300 M and 100 M of the first traffic statistics unit and the second traffic statistics unit, so that the network device can first take the mapping item 1 in which the first traffic statistics unit with a larger value is located as the to-be-adjusted mapping item. If the ratio of the bandwidth of the first member port to the bandwidth of the logical port after this time of adjustment does not exceed the second threshold, the mapping item 2 is no longer selected as the to-be-adjusted mapping item. In this case, when the target member port is determined in S32 for the to-be-adjusted mapping item determined in S31, a ratio of a current bandwidth of the target member port to the bandwidth of the logical port shall not exceed the second threshold, and after carrying traffic corresponding to the mapping item, the bandwidth on the target member port further needs to be less than a product of the bandwidth of the logical port and the second threshold. It should be noted that if there are a plurality of target member ports that meet the foregoing condition, any one of the plurality of target member ports may be used as the target member port in S32. Preferably, in S32, a member port currently with a smallest bandwidth may be selected from the plurality of target member ports as a final target member port. If there is no target member port that meets the foregoing condition, load balancing is not performed on the first member port in a current obtaining period; in other words, S103 and S104 are not performed. In addition, an alarm message is reported, to indicate that each member port in the link aggregation group of the network device runs in an overloaded state and cannot securely forward a traffic flow.

If the mapping relationship configured on the network device does not include the traffic statistics units, but includes only a correspondence between a hash value and a member port, S31 may be specifically: The network device randomly selects one of a plurality of mapping items corresponding to the first member port as a to-be-adjusted mapping item. In this case, when the target member port is determined in S32 for the to-be-adjusted mapping item determined in S31, it is only required that the ratio of the current bandwidth of the target member port to the bandwidth of the logical port does not exceed the second threshold. It should be noted that if there are a plurality of target member ports that meet the foregoing condition, any one of the plurality of target member ports may be used as the target member port in S32; and if there is no target member port that meets the foregoing condition, load balancing is not performed on the first member port in a current obtaining period; in other words, S103 and S104 are not performed. In addition, an alarm message is reported, to indicate that each member port in the link aggregation group of the network device runs in an overloaded state and cannot securely forward a traffic flow.

In still another example, if the first condition is the condition 3, the ratio of the difference between the current first bandwidth of the first member port and the second bandwidth to the bandwidth of the single member port in the link aggregation group is greater than or equal to the third threshold, and S103 may be performed. The second bandwidth is the bandwidth of the second member port before the network device adjusts the first mapping relationship to the second mapping relationship. The third threshold is a preset threshold, and is used to indicate an allowable maximum ratio of a difference between two member ports to a bandwidth of a single member port. For example, if an allowable maximum physical bandwidth of each member port in the link aggregation group of the network device is 10 G, the first bandwidth is 8.5 G, the second bandwidth is 6 G, and the third threshold is 10%, because (8.5 G-6 G)>10 G×10%, it is determined that a load difference between the second member port and the first member port is excessively large. To enable traffic flows carried by the member ports in the link aggregation group to reach a more balanced state, a mapping relationship corresponding to the first member port needs to be adjusted.

In this example, the network device may perform the following operations to specifically determine to-be-adjusted content: S41: The network device selects a to-be-adjusted mapping item from a plurality of mapping items corresponding to the first member port. S42: The network device determines the second member port as a target member port to which the to-be-adjusted mapping item is to be switched.

If the mapping relationship configured on the network device includes a correspondence among a hash value, a member port, and a traffic statistics unit, S41 may be specifically: The network device checks quantities of forwarded bytes that are counted by corresponding traffic statistics units in a plurality of mapping items corresponding to the first member port, and takes a mapping item in which a traffic statistics unit whose quantity of forwarded bytes is the largest is located as a to-be-adjusted mapping item. If differences between current bandwidths of a plurality of member ports in the link aggregation group of the network device and the first bandwidth are not greater than a product of the bandwidth of the single member port and the third threshold, in S42, one of the plurality of member ports may be selected as the target member port, and the target member port needs to meet the following condition: After the first member port switches traffic corresponding to the to-be-adjusted mapping item to the target member port, a difference between the bandwidth of the first member port and a bandwidth of the target member port after the target member port carries the traffic corresponding to the to-be-adjusted mapping item is not greater than the product of the bandwidth of the single member port and the third threshold. Preferably, in S42, a member port currently with a smallest bandwidth may be selected from the plurality of member ports, and whether the member port meets the foregoing condition of selecting the target member port is determined; and if the member port does not meet the foregoing condition of selecting the target member port, a member port currently with a second smallest bandwidth is selected, and whether the member port meets the foregoing condition of selecting the target member port is determined. Operations are performed by analogy until a member port that meets the foregoing condition of selecting the target member port is selected as the target member port selected in S42. If there is no target member port that meets the foregoing condition of selecting the target member port, load balancing is not performed on the first member port in a current obtaining period; in other words, S103 and S104 are not performed. In addition, an alarm message is reported, to indicate that each member port in the link aggregation group of the network device runs in an overloaded state and cannot securely forward a traffic flow.

If the mapping relationship configured on the network device includes only a correspondence between a hash value and a member port, S41 may be specifically: The network device randomly selects one of a plurality of mapping items corresponding to the first member port as a to-be-adjusted mapping item. When the target member port in S42 is determined for the to-be-adjusted mapping item determined in S41, it is only required that a difference between the current bandwidth of the target member port and the first bandwidth is not greater than the product of the bandwidth of the single member port and the third threshold. It should be noted that if there are a plurality of target member ports that meet the foregoing condition, any one of the plurality of target member ports may be used as the target member port in S42. If there is no target member port that meets the foregoing condition, load balancing is not performed on the first member port in a current obtaining period; in other words, S103 and S104 are not performed. In addition, an alarm message is reported, to indicate that each member port in the link aggregation group of the network device runs in an overloaded state and cannot securely forward a traffic flow.

In this example, after a member port with a largest bandwidth and a member port with a smallest bandwidth are adjusted based on this example, if all the member ports in the link aggregation group cannot meet the switching condition indicated in this example, the member port with the largest bandwidth may not be adjusted, but a member port with a second largest bandwidth and the member port with the smallest bandwidth are adjusted. Operations are performed by analogy until none of the member ports in the link aggregation group meets the condition 3 indicated in this example.

It should be noted that the first condition in this embodiment of this application is used to indicate that a load imbalance situation exists in the link aggregation group, and specifically includes but is not limited to content indicated in the foregoing three examples. If the first condition includes at least two of the conditions 1, 2, and 3, that any one condition is met may be considered as that the first condition is met or that all the conditions are met may be considered as that the first condition is met. This may be specifically flexibly designed based on an actual requirement. In addition, the network device can periodically obtain a bandwidth of each member port. Once a member port is found to meet the preconfigured first condition, it is determined that a load imbalance problem exists in the link aggregation group and needs to be processed by using the load balancing method provided in this embodiment of this application, so that the loads on the member ports in the link aggregation group are relatively balanced.

In a specific implementation, S103 may include: S51: The network device determines that the current first bandwidth of the first member port meets the first condition. S52: The network device determines, from the plurality of mapping items corresponding to the first member port, that a to-be-adjusted mapping item is the first mapping relationship between the first hash value and the first member port. S53: The network device determines that a target member port corresponding to the to-be-adjusted mapping item is the second member port. S54: The network device adjusts the first mapping relationship between the first hash value and the first member port to the second mapping relationship between the first hash value and the second member port, that is, changes the first member port in the first mapping relationship between the first hash value and the first member port to the second member port.

The third bandwidth determined based on a corresponding traffic statistics unit in the first mapping relationship between the first hash value and the first member port may be a largest value in values of traffic statistics units corresponding to all the mapping items corresponding to the first member port. In other words, the third bandwidth is greater than the fourth bandwidth. The second member port may be a member port currently with a smallest bandwidth in the link aggregation group of the network device. In addition, after S103, a current fifth bandwidth of the second member port is equal to a sum of the second bandwidth of the second member port and the third bandwidth caused by switching to the first member port (namely, a bandwidth generated by traffic mapped to the first member port by using the first hash value) before S103, and the fifth bandwidth meets a second condition. The second condition includes at least one of the following conditions: Condition 4: The fifth bandwidth is less than or equal to the first threshold, where the fifth bandwidth is a bandwidth of the second member port after the network device adjusts the first mapping relationship to the second mapping relationship. Condition 5: Occupancy of the fifth bandwidth is less than or equal to the second threshold, where the fifth bandwidth is a bandwidth of the second member port after the network device adjusts the first mapping relationship to the second mapping relationship, and the occupancy of the fifth bandwidth is a ratio of the fifth bandwidth to the bandwidth of the logical port corresponding to the link aggregation group. Condition 6: A ratio of a difference between the fifth bandwidth and a sixth bandwidth to the bandwidth of the single member port in the link aggregation group is less than or equal to the third threshold, where the sixth bandwidth is a bandwidth of the first member port after the network device adjusts the first mapping relationship to the second mapping relationship. It should be noted that the second condition may correspond to the first condition. When the first condition is the condition 1, the second condition may be the corresponding condition 4. When the first condition is the condition 2, the second condition may be the corresponding condition 5. When the first condition is the condition 3, the second condition may be the corresponding condition 4.

In this way, the traffic mapped to the first member port by using the first hash value is shared by the second member port with a small load, so that the load on the first member port is reduced, the loads on the member ports in the link aggregation group are relatively balanced, and a bandwidth actually provided by the link aggregation group is improved.

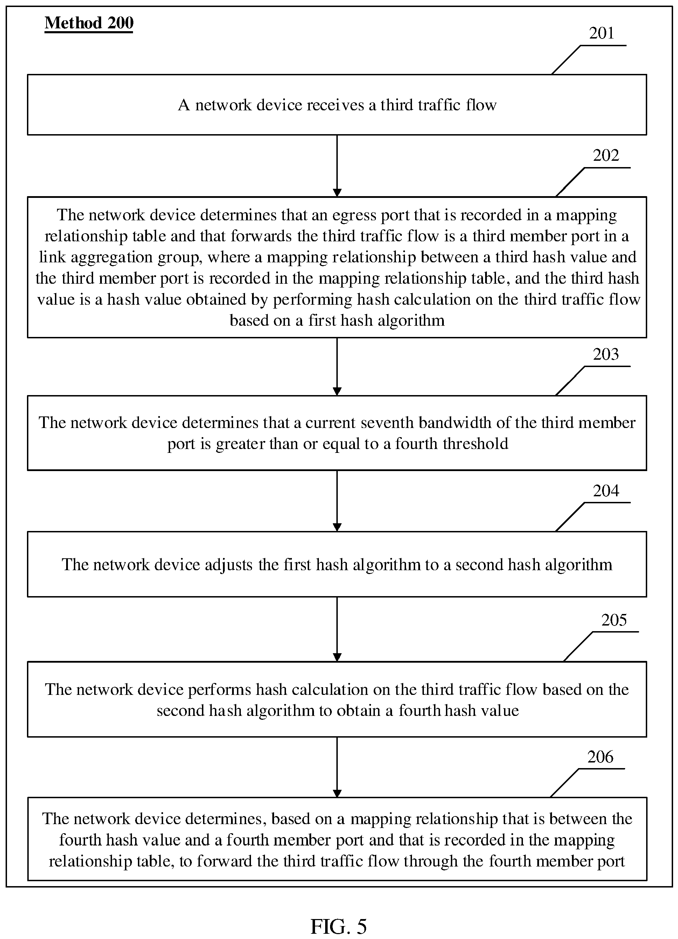

It should be noted that, in this embodiment of this application, the network device may perform determining of the first condition only once for each member port in one obtaining period, and adjust only one mapping item corresponding to the first member port. In a next obtaining period, if it is found that a same member port still meets the first condition, another mapping item corresponding to the member port is adjusted. Operations are performed by analogy until the network device cannot obtain a mapping item that needs to be adjusted. This indicates that the loads on the member ports in the link aggregation group are relatively balanced. Alternatively, in one obtaining period, the network device may perform determining of the first condition a plurality of times for each member port, and adjusts a mapping item for one or more times, until there is no member port that meets the first condition or there is a to-be-adjusted member port that meets the first condition but a target member port that meets the second condition cannot be determined. A quantity of adjustment times and a quantity of determining times depend on a quantity of times for adjusting the member ports to a state in which the first condition is not met. It should be noted that in some cases, it is possible that all the member ports cannot be made to not meet the first condition regardless of an adjustment manner and the quantity of adjustment times. In this case, the network device may further set an upper limit for adjustment, for example, 10 times. In this case, in one obtaining period, if there is still a member port that meets the first condition after 10 times of adjustment, adjustment is stopped and an alarm message is reported, or another manner is used to perform adjustment, for example, adjustment continues by using a method provided in an embodiment shown in FIG. 5.

S104: The network device forwards the first traffic flow through the second member port.

In a specific implementation, before S103, the network device receives the first traffic flow whose egress port is the link aggregation group, and learns that a hash value corresponding to the first traffic flow is the first hash value, to determine, based on the first mapping relationship that is between the first hash value and the first member port and that is included in the mapping relationship configured on the network device, that a specific egress port of the first traffic flow is the first member port, and forward the first traffic flow through the first member port. However, after S103, the mapping relationship configured on the network device is updated, and includes the second mapping relationship between the first hash value and the second member port. When receiving a first traffic flow again, the network device obtains a hash value corresponding to the first traffic flow, namely, the first hash value, to determine, based on the second mapping relationship that is between the first hash value and the second member port and that is included in the mapping relationship configured on the network device, that a specific egress port of the first traffic flow is the second member port, and forward the first traffic flow through the second member port.

In an example, S104 may specifically include: S61: The network device obtains a hash value B based on the first traffic flow. S62: The network device selects last N bits of the hash value B to obtain the first hash value, where N is a positive integer, and the quantity of member ports included in the link aggregation group is less than an N^{th} power of 2. S63: The network device determines, based on the second mapping relationship between the first hash value and the second member port, to forward the first traffic flow through the second member port. N is a constant configured on the network device, and is consistent with N used when the mapping relationship is configured. For example, when configuring the mapping relationship, the network device selects last five bits of a 32-bit calculation result as a hash value. In this case, after receiving a traffic flow, the network device uses a characteristic parameter (or a characteristic parameter and a hash factor) of the traffic flow as a hash key value, calculates a 32-bit binary number, and selects last five bits of the 32-bit binary number as a hash value corresponding to the traffic flow.

It is assumed that the network device calculates a 32-bit binary number 001000111100000101001110000**01011** of the first traffic flow by using a hash key value, and obtains and uses last five bits as the first hash value of the first traffic flow: 01011.01011 is 11 after being converted into a decimal number. In this case, the network device may search for a mapping relationship in which the binary number 01011 (or the decimal number 11) is located, and send the first traffic flow through the second member port in the mapping relationship. The network device includes a mapping relationship between the binary number 01011 (or the decimal number 11) and the second member port. It should be noted that, in this embodiment of this application, in the mapping relationship configured on the network device, a hash value may be represented by a binary value, or may be represented by a decimal number corresponding to a binary number of last N bits.

It can be learned that, according to the method provided in this embodiment of this application, in the network device that uses link aggregation, a correspondence between each member port and a hash value can be dynamically adjusted based on a condition of a bandwidth actually carried by each member port in the link aggregation group, so that a problem of imbalanced loads on the member ports caused when a traffic flow is forwarded based on a fixed mapping relationship between a hash value and a member port is overcame, and each member port in the link aggregation group can share a load of the traffic flow based on an adjusted mapping relationship. Therefore, the loads on the member ports in the link aggregation group are balanced, and the network device can meet a requirement of a high bandwidth.

In addition, FIG. 5 is a schematic flowchart of another load balancing method 200 according to an embodiment of this application. Refer to FIG. 5. The method 200 is applied to a network device on which a link aggregation group is disposed. A mapping relationship of the link aggregation group is preestablished and stored on the network device, and the mapping relationship indicates a member port that is in the link aggregation group and that is configured to forward a traffic flow. For example, in the network shown in FIG. 1, for a traffic flow sent from a base station to a core network, the method 200 may be applied to the PTN device 106. For a traffic flow sent from a core network to a base station, the method 200 may also be applied to the core network device 107. For example, the method 200 may include the following S201 to S206.

S201: The network device receives a third traffic flow.

S202: The network device determines that an egress port that is recorded in a mapping relationship table and that forwards the third traffic flow is a third member port in the link aggregation group, where a mapping relationship between a third hash value and the third member port is recorded in the mapping relationship table, and the third hash value is a hash value obtained by performing hash calculation on the third traffic flow based on a first hash algorithm.

For a specific implementation and related descriptions of S201 and S202 in the method 200, refer to S101 and S102 in the method 100.

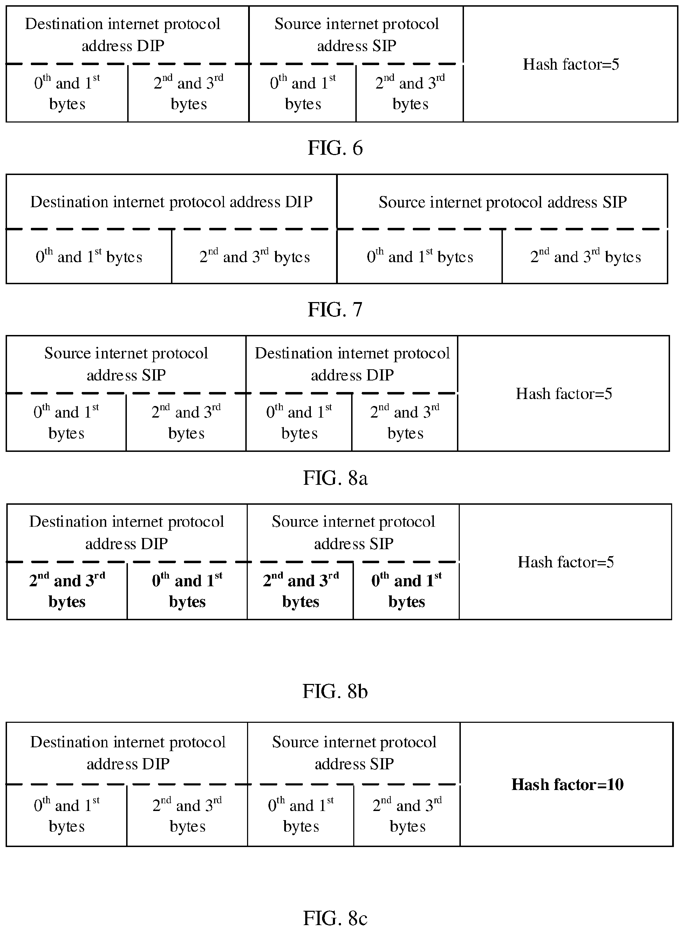

It should be noted that the first hash algorithm is preconfigured on the network device, and the first hash algorithm is used to obtain, on the network device before S203, a hash value corresponding to a traffic flow received by the network device. The first hash algorithm is used to indicate a hash key value used for calculating a hash value of a traffic flow, an internal sequence of hash key values, a sequence between hash key values, values of some hash key values, a specifically used hash algorithm, and the like. For example, refer to FIG. 6. The first hash algorithm indicates that a DIP, a SIP, and a hash factor of a traffic flow are used as a hash key value, a specific sequence is DIP->SIP->hash factor, the DIP and the SIP each have four bytes, the hash factor is 5, and a specifically used hash algorithm is a message digest algorithm version 5 (English: Message Digest Algorithm, MD5 for short). For another example, refer to FIG. 7. The first hash algorithm indicates that a DIP and a SIP of a traffic flow are used as a hash key value, a specific sequence is DIP->SIP, the DIP and the SIP each have four bytes and the four bytes are respectively a 0^{th} byte, a 1^{st} byte, a 2^{nd} byte, and a 3^{rd} byte, and a specifically used hash algorithm is MD5.

It may be understood that after receiving the third traffic flow, the network device may first calculate, based on the first hash algorithm configured on the network device, a hash value C corresponding to the third traffic flow; and then extract last N bits of the hash value C based on N configured on the network device, to obtain the third hash value. In this case, the first traffic flow can be forwarded through the third member port based on the mapping relationship that is between the third hash value and the third member port and that is recorded in the local mapping relationship table.

S203: The network device determines that a current seventh bandwidth of the third member port is greater than or equal to a fourth threshold.

S204: The network device adjusts the first hash algorithm to a second hash algorithm.

When the network device determines, based on the current seventh bandwidth of the third member port, that the third member port meets a third condition, S203 may be performed. The third condition includes but is not limited to at least one of the following conditions: The seventh bandwidth is greater than or equal to the fourth threshold; occupancy of the seventh bandwidth is greater than or equal to a fifth threshold, where the occupancy of the seventh bandwidth is a ratio of the seventh bandwidth to a bandwidth of a logical port corresponding to the link aggregation group; and a ratio of a difference between the seventh bandwidth and an eighth bandwidth to a bandwidth of a single member port in the link aggregation group is greater than or equal to a sixth threshold, where the eighth bandwidth is a smallest bandwidth of another member port before the network device performs S204. For details, refer to related descriptions of the first condition in the method 100. Details are not described in this embodiment of this application again.

In an example, the adjusting the first hash algorithm to the second hash algorithm may be: adjusting an internal byte sequence of a characteristic parameter of a traffic flow in a hash key value. For example, it is assumed that the hash key value includes a DIP, and there are respectively a 0^{th} byte, a 1^{st} byte, a 2^{nd} byte, and a 3^{rd} byte in the original DIP. There may be respectively a 2^{nd} byte, a 3^{rd} byte, a 0^{th} byte, and a 1^{st} byte in an adjusted DIP.

In another example, the adjusting the first hash algorithm to the second hash algorithm may be: adjusting a sequence of characteristic parameters of a traffic flow in a hash key value. For example, it is assumed that the hash key value includes a DIP and a SIP, and an original sequence of the DIP and the SIP in the hash key value is DIP->SIP. In this case, a sequence of the DIP and the SIP in an adjusted hash key value is SIP->DIP.

In still another example, if the hash key value includes a hash factor, the adjusting the first hash algorithm to the second hash algorithm may alternatively be: adjusting a value of the hash factor in the hash key value. For example, it is assumed that a hash factor in the original hash key value is 5. In this case, a hash factor in an adjusted hash key value may be 10.

In yet another example, the adjusting the first hash algorithm to the second hash algorithm may alternatively be: adjusting a specifically used hash algorithm. For example, it is assumed that a specifically used hash algorithm in the original first hash algorithm is MD5. In this case, a specifically used hash algorithm in the second hash algorithm obtained after adjustment may be a secure hash algorithm (English: SHA-1).

It should be noted that, that the network device adjusts the first hash algorithm to the second hash algorithm includes but is not limited to the foregoing four possible adjustment manners. In addition, the foregoing four adjustment manners may be used separately or in combination, and are specifically configured on the network device based on an actual requirement.

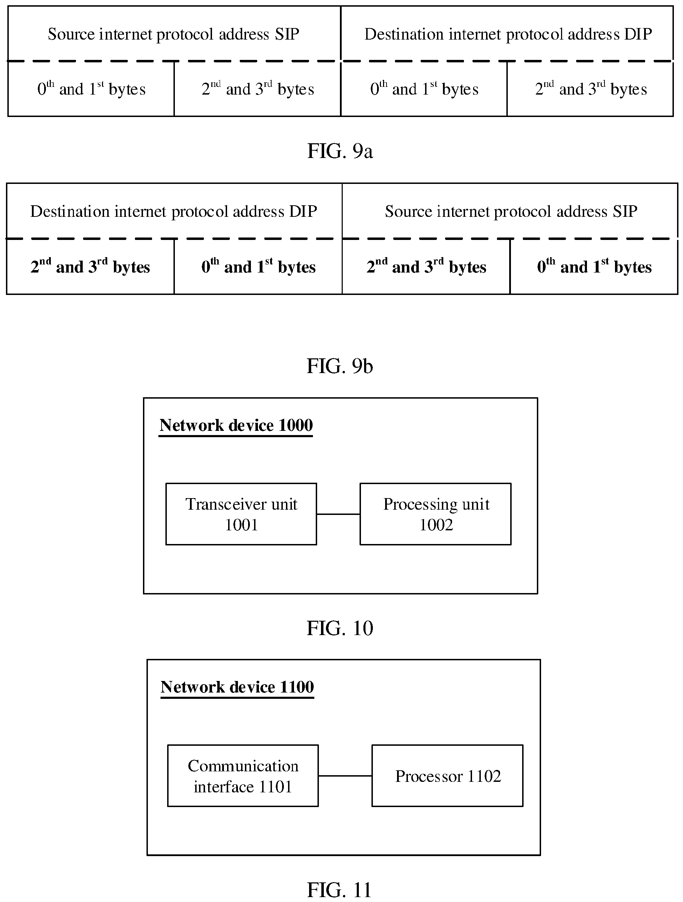

For example, for adjusting a first hash algorithm shown in FIG. 6 to the second hash algorithm, specifically refer to FIG. 8a to FIG. 8c. The second hash algorithm may indicate that a sequence of hash key values is SIP->DIP->Hash factor, as shown in FIG. 8a. The second hash algorithm may further indicate that there are separately a 2^{nd} byte, a 3^{rd} byte, a 0^{th} byte, and a 1^{st} byte in the DIP, and there are separately a 2^{nd} byte, a 3^{rd} byte, a 0^{th} byte, and a 1^{st} byte in the SIP, as shown in FIG. 8b. The second hash algorithm may further indicate that the hash factor is adjusted to 10, as shown in FIG. 8c. For another example, for adjusting a first hash algorithm shown in FIG. 7 to the second hash algorithm, specifically refer to FIG. 9a and FIG. 9b. The second hash algorithm may indicate that a sequence of hash key values is SIP->DIP, as shown in FIG. 9a. The second hash algorithm may further indicate that there are separately a 2^{nd} byte, a 3^{rd} byte, a 0^{th} byte, and a 1^{st} byte in the DIP, and there are separately a 2^{nd} byte, a 3^{rd} byte, a 0^{th} byte, and a 1^{st} byte in the SIP, as shown in FIG. 9b.

It can be learned that when loads on member ports in the link aggregation group cannot be balanced by using a mapping relationship in the current mapping relationship table, a traffic flow can be redistributed to the member ports by adjusting the first hash algorithm to the second hash algorithm in S204, so that the traffic flow can be evenly distributed to the member ports to some extent, and it is possible to balance the loads on the member ports in the link aggregation group.

S205: The network device performs hash calculation on the third traffic flow based on the second hash algorithm to obtain a fourth hash value.

S206: The network device determines, based on a mapping relationship that is between the fourth hash value and a fourth member port and that is recorded in the mapping relationship table, to forward the third traffic flow through the fourth member port.

In a specific implementation, before S204, the network device receives the third traffic flow whose egress port is the link aggregation group, and learns, based on the first hash algorithm, that a hash value corresponding to the third traffic flow is the third hash value, to determine, based on the mapping relationship that is between the third hash value and the third member port and that is included in the mapping relationship table configured on the network device, that a specific egress port of the third traffic flow is the third member port, and forward the third traffic flow through the third member port. However, after performing S204, the network device adjusts the first hash algorithm to the second hash algorithm. When receiving a third traffic flow again, the network device learns, based on the second hash algorithm, that a hash value corresponding to the third traffic flow is the fourth hash value, to determine, based on the mapping relationship that is between the fourth hash value and the fourth member port and that is recorded in the mapping relationship table configured on the network device, that a specific egress port of the third traffic flow is the fourth member port, and forward the third traffic flow through the fourth member port.

In an example, S205 and S206 may specifically include: S71: The network device calculates, based on the second hash algorithm, a hash value D corresponding to the third traffic flow. S72: The network device selects last N bits of the hash value D to obtain the fourth hash value, where N is a positive integer, and a quantity of member ports included in the link aggregation group is less than an N^{th} power of 2. S73: The network device determines, based on the mapping relationship between the fourth hash value and the fourth member port, to forward the third traffic flow through the fourth member port.

It should be noted that, in the method 200, the mapping relationship table configured in the network device does not need to be adjusted, and only the first hash algorithm is adjusted to the second hash algorithm, so that a hash value corresponding to a traffic flow can be changed, a member port to which the traffic flow is mapped is changed, traffic rehashing is implemented, and it is possible to balance the loads on the member ports.

In some possible implementations, the third member port in the method 200 may be the first member port in the method 100, the fourth member port in the method 200 may be the second member port in the method 100, and the third traffic flow in the method 200 may be the first traffic flow in the method 100.

It can be learned that, according to the method provided in this embodiment of this application, in the network device that uses link aggregation, a hash algorithm (for example, a value of a hash factor) for calculating a hash value of a traffic flow can be dynamically adjusted based on a condition of a bandwidth actually carried by each member port in the link aggregation group, to change the hash value corresponding to the traffic flow, so that the service flow is re-mapped to different member ports. Therefore, a problem of imbalanced loads on the member ports caused when a traffic flow is forwarded based on a fixed hash algorithm for calculating a hash value of the traffic flow and a determined mapping relationship between the hash value and a member port is overcame, so that it is possible to balance the loads on the member ports in the link aggregation group to some extent, and the network device can meet the requirement of a high bandwidth.

In some possible implementations, an embodiment of this application further provides a load balancing method, and in the method, load balancing may be performed on a link aggregation group on a network device with reference to the method 100 and the method 200.

In an example, in this embodiment of this application, the method 100 may be first performed. A mapping relationship that corresponds to a member port meeting a first condition and that is between the member port and a hash value is adjusted, to resolve a load imbalance problem of the link aggregation group. When a problem that some member ports meet the first condition cannot be overcame by performing the method 100, the method 200 may be performed. A hash algorithm on the network device is adjusted to change a hash value corresponding to a traffic flow, so that different traffic flows that are originally mapped to a same member port are distributed to different member ports. In this way, the load imbalance problem is resolved.

In another example, in this embodiment of this application, the method 200 may be first performed. A hash algorithm on the network device is continuously adjusted, to dispersedly map traffic flows to different member ports to greatest extent, and loads on the member ports are balanced to some extent. Then, the method 100 is performed. When some member ports meet a first condition, a hash value corresponding to the traffic flow is mapped to another member port based on a mapping relationship that corresponds to the member port and that is between the member port and the hash value. In this way, a load imbalance problem is resolved.

In still another example, in this embodiment of this application, the method 200 may be first performed. A hash algorithm on the network device is continuously adjusted, to dispersedly map traffic flows to different member ports to greatest extent, and loads on the member ports are balanced to some extent. Then, the method 100 is performed. When some member ports meet a first condition, a hash value corresponding to the traffic flow is mapped to another member port based on a mapping relationship that corresponds to the member port and that is between the member port and the hash value. When a problem that some member ports meet the first condition cannot be overcame by performing the method 100, the method 200 may be performed. The hash algorithm on the network device is adjusted to change the hash value corresponding to the traffic flow, so that different traffic flows that are originally mapped to a same member port are distributed to different member ports. In this way, a load imbalance problem is resolved.

According to the method 100, the method 200, and the three examples, the network device can balance the loads on the member ports in the link aggregation group, so that it is ensured that the link aggregation group plays a larger function and provides a larger bandwidth in a use process.

In addition, an embodiment of this application further provides a network device 1000. Refer to FIG. 10. The network device 1000 includes a transceiver unit 1001 and a processing unit 1002. The transceiver unit 1001 is configured to perform a transmitting/receiving operation in the method 100 shown in FIG. 4 or a transmitting/receiving operation in the method 200 shown in FIG. 5. The processing unit 1002 is configured to perform another operation other than the transmitting/receiving operation in the method 100 shown in FIG. 4, or perform another operation other than the transmitting/receiving operation in the method 200 shown in FIG. 5. For example, when the network device 1000 performs the method 100, the transceiver unit 1001 is configured to forward a first traffic flow through a second member port. The processing unit 1002 is configured to determine, based on a first hash value corresponding to the first traffic flow and a first mapping relationship between the first hash value and a first member port in a link aggregation group, that an egress port of the first traffic flow is the first member port. The processing unit 1002 is further configured to determine a current first bandwidth of the first member port. The processing unit 1002 is further configured to adjust the first mapping relationship between the first hash value and the first member port to a second mapping relationship between the first hash value and the second member port based on the first bandwidth. For another example, when the network device 1000 performs the method 200, the transceiver unit 1001 is configured to receive a third traffic flow; the processing unit 1002 is configured to determine that an egress port that is recorded in a mapping relationship table and that forwards the third traffic flow is a third member port in a link aggregation group; the processing unit 1002 is further configured to determine that a current seventh bandwidth of the third member port is greater than or equal to a fourth threshold; the processing unit 1002 is further configured to adjust a first hash algorithm to a second hash algorithm; and the processing unit 1002 is further configured to perform hash calculation on the third traffic flow based on the second hash algorithm to obtain a fourth hash value, and determine, based on a mapping relationship that is between the fourth hash value and a fourth member port and that is recorded in the mapping relationship table, to forward the third traffic flow through the fourth member port.

In addition, an embodiment of this application further provides a network device 1100. Refer to FIG. 11. The network device 1100 includes a communication interface 1101 and a processor 1102. The communication interface 1101 is configured to perform a transmitting/receiving operation in the method 100 shown in FIG. 4 or a transmitting/receiving operation in the method 200 shown in FIG. 5. The processor 1102 is configured to perform another operation other than the transmitting/receiving operation in the method 100 shown in FIG. 4, or perform another operation other than the transmitting/receiving operation in the method 200 shown in FIG. 5. For example, when the network device 1100 performs the method 100, the communication interface 1101 is configured to forward a first traffic flow through a second member port. The processor 1102 is configured to determine, based on a first hash value corresponding to the first traffic flow and a first mapping relationship between the first hash value and a first member port in a link aggregation group, that an egress port of the first traffic flow is the first member port. The processor 1102 is further configured to determine a current first bandwidth of the first member port. The processor 1102 is further configured to adjust the first mapping relationship between the first hash value and the first member port to a second mapping relationship between the first hash value and the second member port based on the first bandwidth. For another example, when the network device 1100 performs the method 200, the communication interface 1101 is configured to receive a third traffic flow; the processor 1102 is configured to determine that an egress port that is recorded in a mapping relationship table and that forwards the third traffic flow is a third member port in a link aggregation group; the processor 1102 is further configured to determine that a current seventh bandwidth of the third member port is greater than or equal to a fourth threshold; the processor 1102 is further configured to adjust a first hash algorithm to a second hash algorithm; and the processor 1102 is further configured to perform hash calculation on the third traffic flow based on the second hash algorithm to obtain a fourth hash value, and determine, based on a mapping relationship that is between the fourth hash value and a fourth member port and that is recorded in the mapping relationship table, to forward the third traffic flow through the fourth member port.

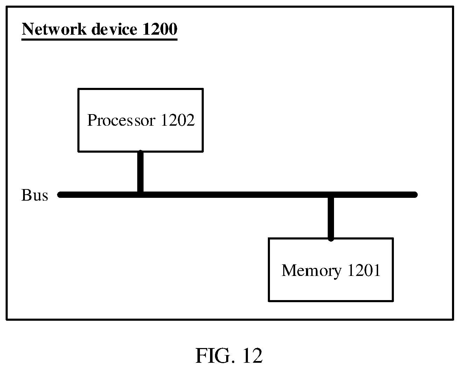

In addition, an embodiment of this application further provides a network device 1200. Refer to FIG. 12. The network device 1200 includes a memory 1201 and a processor 1202. The memory 1201 is configured to store program code. The processor 1202 is configured to run instructions in the program code, to enable the network device 1200 to perform the method 100 in the embodiment shown in FIG. 4 or the method 200 in the embodiment shown in FIG. 5.

It may be understood that, in the foregoing embodiment, the processor may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor may be one processor, or may include a plurality of processors. The memory may be a volatile memory (English: volatile memory) such as a random-access memory (English: random-access memory, RAM for short); a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short), or a combination of the foregoing types of memories. The memory may be one memory, or may include a plurality of memories. In a specific implementation, the memory stores computer-readable instructions, and the computer-readable instructions include a plurality of software modules, for example, a sending module, a processing module, and a receiving module. After executing each software module, the processor may perform a corresponding operation based on an indication of each software module. In this embodiment, an operation performed by a software module is actually an operation performed by the processor based on an indication of the software module. After executing the computer-readable instructions in the memory, the processor may perform, based on indications of the computer-readable instructions, all operations that may be performed by the network device.

It may be understood that, in the foregoing embodiment, the communication interface 1101 of the network device 1100 may be specifically used as the transceiver unit 1001 in the network device 1000, to implement data communication between the network device and another network device.

In addition, an embodiment of this application further provides a computer-readable storage medium. The computer-readable storage medium stores instructions, and when the instructions are run on a computer, the computer is enabled to perform the load balancing method in the embodiment shown in FIG. 4 or FIG. 5.

In addition, an embodiment of this application further provides a computer program product. When the computer program product runs on a computer, the computer is enabled to perform the load balancing method in the embodiment shown in FIG. 4 or FIG. 5.

"First" in names such as "first traffic flow" and "first hash value" mentioned in embodiments of this application is merely used as a name identifier, and does not represent first in a sequence. This rule is also applicable to "second" and the like.

It can be learned from the foregoing descriptions of the implementations that, a person skilled in the art may clearly understand that a part or all of the steps of the methods in the foregoing embodiments may be implemented by using software and a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or an optical disc, and include several instructions for instructing a computer device (which may be a personal computer, a server, or a network communication device such as a router) to perform the methods described in the embodiments or some parts of the embodiments of this application.

The embodiments in this specification are all described in a progressive manner, for same or similar parts in the embodiments, refer to these embodiments, and each embodiment focuses on a difference from other embodiments. Especially, a device embodiment is basically similar to a method embodiment, and therefore is described briefly; for related parts, refer to partial descriptions in the method embodiment. The described device embodiment is merely an example. The modules described as separate parts may or may not be physically separate, and parts displayed as modules may or may not be physical modules, may be located in one place, or may be distributed on a plurality of network units. Some or all the modules may be selected based on an actual need to achieve the objectives of the solutions of the embodiments. A person of ordinary skill in the art may understand and implement the solutions of the embodiments without creative efforts.

The foregoing descriptions are merely preferred implementations of this application, and are not intended to limit the protection scope of this application. It should be noted that a person of ordinary skill in the art may further make some improvements and ornaments without departing from this application. These improvements and ornaments should also fall within the protection scope of this application.

## Claims

1. A load balancing method, comprising:
determining, by a network device based on a first hash value corresponding to a first traffic flow and a first mapping relationship between the first hash value and a first member port in a link aggregation group, that an egress port of the first traffic flow is the first member port, wherein the first hash value is a hash value obtained by performing hash calculation based on the first traffic flow;
determining, by the network device, a current first bandwidth of the first member port;
adjusting, by the network device, the first mapping relationship to a second mapping relationship between the first hash value and a second member port in the link aggregation group based on the first bandwidth; and
forwarding, by the network device, the first traffic flow through the second member port.

2. The method according to claim 1, wherein the first mapping relationship is adjusted to the second mapping relationship when the first member port meets a first condition.

3. The method according to claim 2, wherein the first condition comprises at least one of the following:
the first bandwidth is greater than or equal to a first threshold;
occupancy of the first bandwidth is greater than or equal to a second threshold, wherein the occupancy of the first bandwidth is a ratio of the first bandwidth to a bandwidth of a logical port corresponding to the link aggregation group; or
a ratio of a difference between the first bandwidth and a second bandwidth to a bandwidth of a single member port in the link aggregation group is greater than or equal to a third threshold, wherein the second bandwidth is a bandwidth of the second member port before the network device adjusts the first mapping relationship to the second mapping relationship.

4. The method according to any one of claims 1 to 3, wherein before the network device adjusts the first mapping relationship to the second mapping relationship, the second member port is a member port currently with a smallest bandwidth in member ports in the link aggregation group.

5. The method according to any one of claims 1 to 4, wherein the method further comprises:
obtaining, by the network device, the first mapping relationship and a third mapping relationship, wherein the first mapping relationship comprises a mapping relationship among the first member port, the first hash value, and a first traffic statistics unit, the third mapping relationship comprises a mapping relationship among the first member port, a second hash value, and a second traffic statistics unit, and the second hash value is a hash value obtained by performing hash calculation based on a second traffic flow;
determining, by the network device based on a counting result of the first traffic statistics unit, a third bandwidth that is of the first member port and that is occupied by the first traffic flow;
determining, by the network device based on a counting result of the second traffic statistics unit, a fourth bandwidth that is of the first member port and that is occupied by the second traffic flow; and
determining, by the network device, the first bandwidth based on the third bandwidth and the fourth bandwidth.

6. The method according to claim 5, wherein the third bandwidth is greater than the fourth bandwidth.

7. The method according to any one of claims 1 to 6, wherein the first mapping relationship is adjusted to the second mapping relationship when the second member port meets a second condition.

8. The method according to claim 7, wherein the second condition comprises at least one of the following:
a fifth bandwidth is less than or equal to the first threshold, wherein the fifth bandwidth is a bandwidth of the second member port after the network device adjusts the first mapping relationship to the second mapping relationship;
occupancy of the fifth bandwidth is less than or equal to the second threshold, wherein the fifth bandwidth is a bandwidth of the second member port after the network device adjusts the first mapping relationship to the second mapping relationship, and the occupancy of the fifth bandwidth is a ratio of the fifth bandwidth to the bandwidth of the logical port corresponding to the link aggregation group; or
a ratio of a difference between the fifth bandwidth and a sixth bandwidth to the bandwidth of the single member port in the link aggregation group is less than or equal to the third threshold, wherein the fifth bandwidth is a bandwidth of the second member port after the network device adjusts the first mapping relationship to the second mapping relationship, and the sixth bandwidth is a bandwidth of the first member port after the network device adjusts the first mapping relationship to the second mapping relationship.

9. The method according to any one of claims 1 to 8, wherein the method further comprises:
receiving, by the network device, a third traffic flow;
determining, by the network device, that an egress port that is recorded in a mapping relationship table and that forwards the third traffic flow is a third member port in the link aggregation group, wherein a mapping relationship between a third hash value and the third member port is recorded in the mapping relationship table, and the third hash value is a hash value obtained by performing hash calculation on the third traffic flow based on a first hash algorithm;
determining, by the network device, that a current seventh bandwidth of the third member port is greater than or equal to a fourth threshold;
adjusting, by the network device, the first hash algorithm to a second hash algorithm;
performing, by the network device, hash calculation on the third traffic flow based on the second hash algorithm, to obtain a fourth hash value; and
determining, by the network device based on a mapping relationship that is between the fourth hash value and a fourth member port and that is recorded in the mapping relationship table, to forward the third traffic flow through the fourth member port.

10. The method according to claim 9, wherein the adjusting, by the network device, the first hash algorithm to a second hash algorithm comprises at least one of the following manners:
adjusting a byte sequence of at least one characteristic parameter in the first traffic flow;
adjusting an arrangement sequence of characteristic parameters in the first traffic flow; or
adjusting a value of a hash factor.

11. The method according to claim 10, wherein the characteristic parameters comprise at least one of a destination address DA, a source address SA, a destination internet protocol address DIP, and a source internet protocol address SIP of the first traffic flow.

12. The method according to any one of claims 9 to 11, wherein the third member port is the first member port.

13. The method according to any one of claims 9 to 12, wherein the fourth member port is the second member port.

14. A network device, comprising:
a communication interface; and
a processor connected to the communication interface, wherein
based on the communication interface and the processor, the network device is configured to perform the method according to any one of claims 1 to 13.

15. A network device, wherein the network device comprises a memory and a processor;
the memory is configured to store program code; and
the processor is configured to run instructions in the program code, to enable the network device to perform the method according to any one of claims 1 to 13.

16. A computer-readable storage medium, wherein the computer-readable storage medium stores instructions, and when the instructions are run on a computer, the computer is enabled to perform the method according to any one of claims 1 to 13.
